# EUROPÄISCHE PATENTSCHRIFT

(11) **EP 3 049 296 B1**
(45) Veröffentlichungstag und Bekanntmachung des Hinweises auf die Patenterteilung: **27.09.2017**
(21) Anmeldenummer: 14793590.2
(22) Anmeldetag: 06.11.2014
(51) Int. Cl.: B60T 13/565

(54) **BREMSKRAFTVERSTÄRKER FÜR EINE KRAFTFAHRZEUGBREMSANLAGE MIT RÜCKHALTEEINRICHTUNG FÜR RÜCKSTELLFEDER UND BREMSKRAFTVERSTÄRKUNGSANORDNUNG**
BRAKE BOOSTER FOR A MOTOR VEHICLE BRAKE SYSTEM, COMPRISING A RETAINING MECHANISM FOR A RESTORING SPRING, AND BRAKE BOOSTER ASSEMBLY
SERVOFREIN POUR SYSTÈME DE FREINAGE DE VÉHICULE AUTOMOBILE COMPRENANT UN MOYEN DE RAPPEL D'UN RESSORT DE RAPPEL ET ENSEMBLE DE SERVOFREINAGE

(30) Priorität: 13.12.2013 DE 102013021122
(43) Veröffentlichungstag der Anmeldung: 03.08.2016
(73) Patentinhaber: Lucas Automotive GmbH, 56070 Koblenz (DE)
(72) Erfinder: WARKENTIN, Paul, 56564 Neuwied (DE); CALVO MARTINEZ, Jose-Manuel, 56642 Kruft (DE); WINGENDER, Kurt, 56244 Hartenfels (DE)
(74) Vertreter: Schmidt, Steffen J.
(86) Internationale Anmeldenummer: PCT/EP2014/073944
(87) Internationale Veröffentlichungsnummer: WO 2015/086231

(56) Entgegenhaltungen:
- DE-A1-102008 035 179
- US-B1- 6 213 569

## Beschreibung

Die vorliegende Erfindung betrifft einen Bremskraftverstärker für eine Kraftfahrzeugbremsanlage, mit einem mit einem Bremspedal gekoppelten oder koppelbaren und entlang einer Verlagerungsachse verlagerbaren Krafteingangsglied, einem nach Maßgabe einer Verlagerung des Krafteingangsglieds betätigbaren Steuerventil, einer in einem Verstärkergehäuse angeordneten, über das Steuerventil ansteuerbaren Kammeranordnung mit wenigstens einer Unterdruckkammer und wenigstens einer Arbeitskammer, die über wenigstens eine mit dem Steuerventil gekoppelte bewegliche Wand voneinander getrennt sind, und einem Kraftausgangsglied zum Abgeben einer Bremskraft an eine nachgeschaltete Hauptbremszylinderanordnung, wobei das Steuerventil mit dem Kraftausgangsglied über eine Rückstellfeder in eine Ausgangsstellung vorgespannt ist, wobei sich die Rückstellfeder mit einem ersten Ende an dem Steuerventil abstützt.

Ein derartiger Bremskraftverstärker ist aus dem Stand der Technik bekannt und beispielsweise in dem Dokument DE 10 2008 035 179 A1 gezeigt. Dabei ist ferner vorgesehen, dass sich die Rückstellfeder mit einem zweiten Ende an der Hauptbremszylinderanordnung abstützt. Die Hauptbremszylinderanordnung ragt durch eine Aufnahmeöffnung in das Verstärkergehäuse hinein, wobei die Aufnahmeöffnung einen allgemein größeren Durchmesser aufweist als die zylindrisch ausgebildete Rückstellfeder.

Bei der Montage des Bremskraftverstärkers mit der Hauptbremszylinderanordnung muss die Rückstellfeder zunächst zwischen dem Steuerventil und der Aufnahmeöffnung im Verstärkergehäuse eingesetzt werden. Folglich besteht die Gefahr, dass vor dem Zusammenführen der Hauptbremszylinderanordnung mit dem Bremskraftverstärker die Rückstellfeder aus der Aufnahmeöffnung herausrutscht oder sich innerhalb des Verstärkergehäuses verkantet. Dadurch können die Rückstellfeder und andere Komponenten des Bremskraftverstärkers beschädigt werden und der Montageablauf wird gestört. Vergleichbare Probleme können ebenso bei Wartungs- oder Reparaturarbeiten auftreten, sobald der Bremskraftverstärker und die Hauptbremszylinderanordnung wieder getrennt werden. Zur Vermeidung dieser Probleme sieht die Lösung gemäß dem Dokument DE 10 2008 035 179 A1 eine Rückhalteeinrichtung für die Rückstellfeder in Form eines Stützringes vor. Dieser wird zwischen der Rückstellfeder und der Aufnahmeöffnung angeordnet und überschreitet den Durchmesser der Aufnahmeöffnung, so dass weder der Stützring noch die Rückstellfeder aus der Aufnahmeöffnung herausfallen können.

Bei dieser Lösung hat es sich allerdings als nachteilig herausgestellt, dass der Stützring als ein zusätzliches Bauteil in den Montageablauf des Bremskraftverstärkers integriert werden muss, was einen entsprechenden Zeit- und Kostenaufwand nach sich zieht.

Es ist deshalb eine Aufgabe der vorliegenden Erfindung, einen Bremskraftverstärker der eingangs bezeichneten Art bereitzustellen, der mit kostengünstigen und einfachen Mitteln ein unbeabsichtigtes Herausfallen der Rückstellfeder aus dem Verstärkergehäuse verhindert.

Diese Aufgabe wird durch einen Bremskraftverstärker der eingangs bezeichneten Art gelöst, bei dem vorgesehen ist, dass das Verstärkergehäuse eine Aufnahmeöffnung für die nachgeschaltete Hauptbremszylinderanordnung aufweist, die mit wenigstens einem axialen Führungsabschnitt und mit wenigstens einem radialen Anschlagabschnitt ausgebildet ist, die jeweils dazu eingerichtet sind, ein zweites Ende der Rückstellfeder abzustützen.

In Abgrenzung vom Stand der Technik sieht die Erfindung nicht mehr vor, dass ein zusätzliches Bauteil in Form eines Stützrings in dem Bremskraftverstärker montiert werden muss. Die Erfinder haben vielmehr erkannt, dass das Einsetzten des zusätzlichen Stützringes und dessen korrekte Positionierung an der Aufnahmeöffnung zahlreiche komplexe Handhabungsschritte umfasst und somit den notwendigen Zeit- und Kostenaufwand deutlich erhöht. Stattdessen sieht die Erfindung vor, dass eine vergleichbar wirkende Rückhalteeinrichtung direkt an dem Verstärkergehäuse bzw. an dessen Aufnahmeöffnung angeformt oder angebracht ist. Als besonders vorteilhafte erfindungsgemäße Variante hat sich dabei ein einstückiges Anformen der Rückhalteeinrichtung an dem Verstärkergehäuse erwiesen. Dadurch entfallen sämtliche im Stand der Technik erforderlichen zusätzlichen Handhabungsschritte und die damit einhergehenden Fehlerpotentiale.

Erfindungsgemäß ist die Rückhalteeinrichtung in Form des wenigstens einen axialen Führungsabschnittes und des wenigstens einen radialen Anschlagabschnittes ausgebildet, die an der Aufnahmeöffnung angeordnet sind. Durch diese Abschnitte können sowohl ein Herausfallen der Rückstellfeder aus der Aufnahmeöffnung, also ein Verrutschen in axialer Richtung, wie auch ein Verkanten der Rückstellfeder bzw. ein Verrutschen in radialer Richtung effektiv verhindert werden.

Eine Weiterbildung der Erfindung sieht vor, dass sich der Führungsabschnitt und der Anschlagabschnitt zumindest teilweise in einem gemeinsamen Umfangssegmentbereich der Aufnahmeöffnung erstrecken und axial benachbart angeordnet sind. Gemäß dieser Weiterbildung können der Führungsabschnitt und der Anschlagabschnitt in einem achsenthaltenden Schnitt betrachtet somit einen stufenförmigen Abschnitt der Aufnahmeöffnung definieren, mit dem das zweite Ende der Rückstellfeder abgestützt wird. Dabei kann beispielsweise vorgesehen sein, dass der Führungsabschnitt und der Anschlagabschnitt derart angeordnet sind, dass der Führungsabschnitt die Rückstellfeder über einen gewissen Umfangssegmentbereich von innen oder von außen umgibt, also beispielsweise, dass der Führungsabschnitt sich in einen von der Rückstellfeder umspannten, typischerweise zylindrischen Innenhohlraum erstreckt oder sich entlang einer Außenumfangsfläche der Rückstellfeder erstreckt.

In einer Weiterbildung der Erfindung ist vorgesehen, dass sich der Führungsabschnitt und der Anschlagabschnitt im Wesentlichen in verschiedenen Umfangssegmentbereichen der Aufnahmeöffnung erstrecken. Mit anderen Worten ist bei dieser Weiterbildung vorgesehen, dass der Führungsabschnitt und der Anschlagabschnitt entlang des Umfangs der Aufnahmeöffnung weitestgehend versetzt zueinander angeordnet sind. Dadurch kann eine besonders kompakt gestaltete Rückhalteeinrichtung bereitgestellt werden, da der Führungsabschnitt und der Anschlagabschnitt sich zumindest teilweise über einen gemeinsamen axialen Bereich erstrecken können.

In diesem Zusammenhang kann ferner erfindungsgemäß vorgesehen sein, dass die Aufnahmeöffnung mit einer Mehrzahl von Führungsabschnitten und/oder Anschlagabschnitten ausgebildet ist und die Führungsabschnitte und Anschlagabschnitte im Wesentlichen gleichmäßig verteilt entlang des Umfangs der Aufnahmeöffnung angeordnet sind. Durch Bereitstellen einer Mehrzahl von Führungs- und/oder Anschlagabschnitten ist eine besonders sichere Rückhaltewirkung gewährleistet, wobei insbesondere durch Bereitstellen einer Mehrzahl von Führungsabschnitten eine sichere Positionierung bzw. zentrierte Ausrichtung der Rückstellfeder in radialer Richtung erreicht werden kann. Durch das gleichmäßige Verteilen entlang des Umfangs der Aufnahmeöffnung kann, wie nachfolgend noch ausführlicher beschrieben, der Montageprozess bei Einführen der Hauptbremszylinderanordnung in die Aufnahmeöffnung erleichtert werden, da das Orientieren dieser Komponenten zueinander erleichtert wird.

Eine Weiterbildung der Erfindung sieht ferner vor, dass der Führungsabschnitt von der Aufnahmeöffnung radial nach außen abgewinkelt ist. Dabei kann erfindungsgemäß vorgesehen sein, dass der Winkelbetrag, um den der Führungsabschnitt abgewinkelt wird, einen allgemein geringfügigen Wert zwischen 1° bis 40° einnimmt und besonders bevorzugt zwischen 5° bis 20°. Durch Abwinkeln des Führungsabschnitts wird allgemein eine zentrierende Wirkung mit Bezug auf die Rückstellfeder bei einer Relativbewegung von Aufnahmeöffnung und Rückstellfeder erreicht, wobei gleichzeitig ein ausreichend sicheres Abstützen in radialer Richtung sichergestellt ist. Somit kann beispielswiese eine dauerhaft konzentrische Anordnung einer zylindrischen Rückstellfeder zu der Verlagerungsachse erreicht werden.

In einer Weiterbildung der Erfindung ist vorgesehen, dass der Anschlagabschnitt von der Aufnahmeöffnung radial nach innen abgewinkelt ist. Dabei kann erfindungsgemäß vorgesehen sein, dass der Anschlagabschnitt um einen Winkelbetrag zwischen 20° und 120° von der Aufnahmeöffnung abgewinkelt ist und besonders bevorzugt um einen Betrag von 40° bis 80°. Allgemein kann durch ein derartiges Abwinkeln des Anschlagabschnitts in besonders einfacher und kompakter Weise eine Stirnfläche zum Abstützen der Rückstellfeder bereitgestellt werden, wodurch ein Herausfallen der Rückstellfeder aus der Aufnahmeöffnung verhindert werden kann. Durch ein Abwinkeln um einen Winkel von weniger als 90° und besonders bevorzugt zwischen 40° und 80° wird erreicht, dass eine ausreichende große Anschlagfläche bereitgestellt ist, ohne dass ein Einführen der Hauptbremszylindereinrichtung in die Aufnahmeöffnung zu stark beeinträchtigt wird.

In einer Weiterbildung der Erfindung ist vorgesehen, dass der Anschlagabschnitt mit dem zweiten Ende der Rückstellfeder zumindest teilweise radial überlappt. Durch ein derartiges radiales Überlappen kann eine axiale Verschiebung der Rückstellfeder besonders effektiv vermieden werden.

Ebenso kann erfindungsgemäß vorgesehen sein, dass der Führungsabschnitt mit dem zweiten Ende der Rückstellfeder zumindest teilweise axial überlappt. Eine derartige axiale Überlappung bietet einen effektiven Halt in radialer Richtung und ebenso eine axiale Führung und somit auch Zentrierung der Rückstellfeder.

Eine Weiterbildung der Erfindung sieht vor, dass die Aufnahmeöffnung als ein Querschnittsbereich eines sich von dem Verstärkergehäuse erstreckenden rohrförmigen Kragens ausgebildet ist. Der Kragen kann dabei allgemein als ein Aufnahmeabschnitt mit führender bzw. abstützender und zentrierender Wirkung für die Hauptbremszylinderanordnung und/oder die Rückstellfeder ausgebildet sein. Vorzugsweise kann ferner vorgesehen sein, dass die Aufnahmeöffnung als derjenige Querschnittsbereich des Kragens ausgebildet ist, welcher der Rückstellfeder direkt gegenüberliegt, also typischerweise als ein der Rückstellfeder gegenüberliegendes axiales Ende des Kragens.

In diesem Zusammenhang kann ferner erfindungsgemäß vorgesehen sein, dass sich der Kragen konzentrisch zu der Verlagerungsachse erstreckt. Ebenso kann erfindungsgemäß vorgesehen sein, dass der Kragen sich zumindest teilweise in das Verstärkergehäuse hinein erstreckt. Dies vereinfacht insgesamt die Montage von Hauptbremszylinderanordnung und Bremskraftverstärker und stellt eine zuverlässige Funktionsweise des Bremskraftverstärkers bei einem kompakten Aufbau sicher.

Eine Weiterbildung der Erfindung sieht vor, dass der Führungsabschnitt und der Anschlagabschnitt das zweite Ende der Rückstellfeder lediglich vor Montage des Bremskraftverstärkers mit der Hauptbremszylinderanordnung unmittelbar abstützen und nach der Montage das zweite Ende der Rückstellfeder von dem Führungsabschnitt und dem Anschlagabschnitt abgehoben ist. Das Abstützen der Rückstellfeder kann also sozusagen nach der Montage durch die Hauptbremszylinderanordnung übernommen werden. Dadurch ist eine optimale Relativpositionierung von Hauptbremszylinderanordnung, Rückstellfeder und Steuerventil sichergestellt, ohne zusätzliche und eventuell störende Einflüsse der erfindungsgemäßen Rückhalteeinrichtung. Es versteht sich, dass erfindungsgemäß ebenso vorgesehen sein kann, dass in Folge einer Demontage bzw. eines Lösens der Hauptbremszylinderanordnung von dem Bremskraftverstärker wiederum ein Abstützen der Rückstellfeder durch die erfindungsgemäße Rückhalteeinrichtung hergestellt wird.

Die Erfindung betrifft ferner eine Bremskraftverstärkungsanordnung, umfassend einen Bremskraftverstärker nach einer der vorstehend beschriebenen Varianten und eine Hauptbremszylinderanordnung. Dabei ist erfindungsgemäß vorgesehen, dass die Hauptbremszylinderanordnung einen axialen Endabschnitt aufweist, der sich in oder durch die Aufnahmeöffnung des Bremskraftverstärkers erstreckt, wobei die Außenumfangsfläche des axialen Endabschnitts korrespondierend zu dem Führungsabschnitt und/oder dem Anschlagabschnitt profiliert ist. Unter einer korrespondierenden Profilierung ist in diesem Fall insbesondere eine derartige Profilierung zu verstehen, die ein kollisionsfreies Einführen der Hauptbremszylinderanordnung in die Aufnahmeöffnung und vorbei an der Rückhalterichtung ermöglicht.

In diesem Zusammenhang kann ferner erfindungsgemäß vorgesehen sein, dass der axiale Endabschnitt eine Ausnehmung in seiner Außenumfangsfläche aufweist, die dazu ausgebildet ist, den Führungsabschnitt der Aufnahmeöffnung aufzunehmen. Dabei ist es zur Vereinfachung der Montage insbesondere vorteilhaft, wenn die Ausnehmung in Umfangsrichtung größer dimensioniert ist als der Führungsabschnitt, wodurch eine gewisse Toleranz bezüglich der Relativpositionierung der Komponenten zueinander bereitgestellt ist.

Ferner kann in diesem Zusammenhang erfindungsgemäß vorgesehen sein, dass der axiale Endabschnitt als Teil einer separaten Aufsatzhülse ausgebildet ist, die an der Hauptbremszylinderanordnung angebracht ist. Dies ermöglicht, dass an der Hauptbremszylinderanordnung an sich keine Änderungen vorgenommen werden müssen, sondern lediglich die separate Aufsatzhülse an den mit der erfindungsgemäßen Rückhalteeinrichtung ausgebildeten Bremskraftverstärker angepasst werden muss. Dabei kann erfindungsgemäß vorteilhafterweise vorgesehen sein, dass die Aufsatzhülse aus einem Kunststoffmaterial hergestellt ist. Dies erhöht die Formgestaltungsfreiheit und somit die Möglichkeiten zum Ausbilden einer Profilierung des axialen Endabschnitts korrespondierend zu dem Führungsabschnitt und/oder Anschlagabschnitt. Das Anbringen der Aufsatzhülse an der Hauptbremszylinderanordnung kann beispielsweise mittels einer Verschraubung erfolgen.

Die Aufsatzhülse kann darüber hinaus mit wenigstens einer Stirnfläche ausgebildet sein, über die sich die Rückstellfeder mit Ihrem zweiten Ende an der Hauptbremszylinderanordnung abstützt. Dabei kann das zweite Ende der Rückstellfeder, insbesondere in Form einer Abschlusswindung, auch in Ausnehmungen in der Stirnfläche aufgenommen sein. Die Aufnahme des zweiten Endes kann besonders effektiv durch derartige Ausnehmungen erreicht werden, die im Wesentlichen komplementär zu dem zweiten Ende der Rückstellfeder geformt sind. Dies ermöglicht eine Positionierung und ein Halten der Rückstellfeder in einer gewünschten Ausrichtung und vermeidet ein Verrutschen der Rückstellfeder insbesondere in radialer Richtung. Ebenso kann vorgesehen sein, dass das zweite Ende der Rückstellfeder derart innerhalb der Ausnehmungen aufgenommen, dass ein Verdrehen der Rückstellfeder in zumindest eine Richtung um die Verlagerungsachse blockiert ist, bspw. durch Vorsehen entsprechender Anschlagflächen innerhalb der Ausnehmung.

Die Erfindung wird im Folgenden beispielhaft anhand der beiliegenden Figuren erläutert.

Es stellen dar:
- Fig. 1: eine achsenthaltende Schnittansicht eines erfindungsgemäßen Bremskraftverstärkers gemäß einer Ausführungsform der Erfindung mit einem jeweils in Querschnitt gezeigten Führungsabschnitt und Anschlagabschnitt;
- Fig. 2: den Bremskraftverstärker gemäß Fig. 1 mit darin eingesetzter Hauptbremszylinderanordnung;
- Fig. 3: eine Detailansicht der Aufnahmeöffnung des Bremskraftverstärkers gemäß Fig. 1;
- Fig. 4: eine Detailansicht eines Führungsabschnitts gemäß Fig. 3;
- Fig. 5: eine Detailansicht eines Anschlagabschnitts gemäß Fig. 3;
- Fig. 6: eine Detailansicht der Aufnahmeöffnung aus Fig. 3 mit daran angeordneter Rückstellfeder;
- Fig. 7: eine Detailansicht eines Anlageabschnitts gemäß Fig. 6;
- Fig. 8: eine Detailansicht eines Führungsabschnitts gemäß Fig. 6;
- Fig. 9: eine Hauptbremszylinderanordnung mit profilierter Aufsatzhülse zur Montage mit einem Bremskraftverstärker gemäß Figuren 1 bis 8; und
- Fig. 10: eine Detailansicht der in der Aufnahmeöffnung gemäß Fig. 6 eingeführten Aufsatzhülse aus Fig. 9.

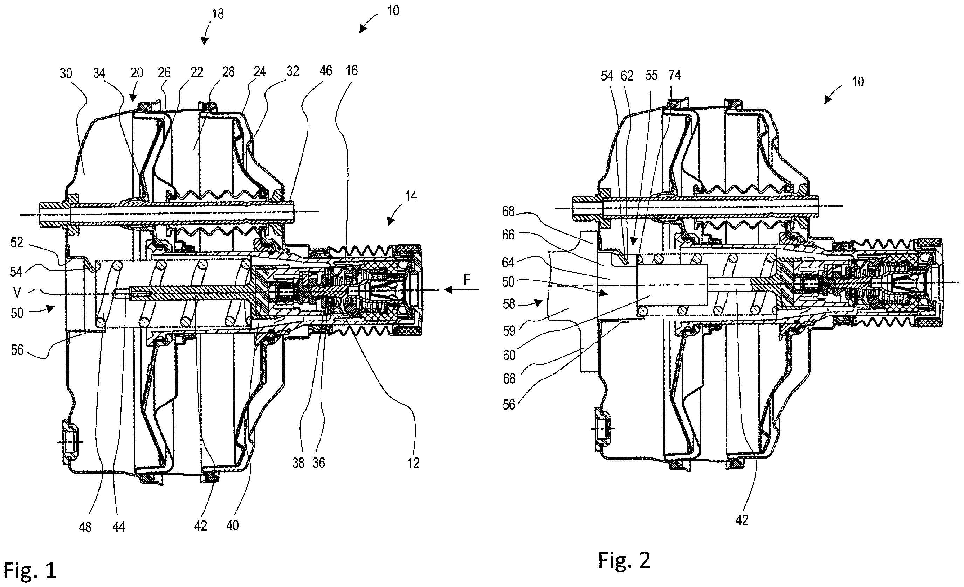

In Fig. 1 ist ein erfindungsgemäßer Bremskraftverstärker in achsenthaltender Schnittansicht gezeigt und allgemein mit 10 bezeichnet. Der Bremskraftverstärker umfasst ein Krafteingangsglied 12, das über ein nicht dargestelltes Bremspedal mit einer Kraft F beaufschlagt werden kann und in Fig. 1 entlang einer Verlagerungsachse V nach links verlagert werden kann. Mit dem Krafteingangsglied 12 ist ein an sich herkömmlich aufgebautes Steuerventil 14 gekoppelt, dessen Steuerventilgehäuse 16 relativ zu einem Verstärkergehäuse 18 verlagerbar ist. In dem Verstärkergehäuse 18 befindet sich eine Tandemkammeranordnung 20, die über eine fest in dem Verstärkergehäuse 18 installierte Wand 22 in zwei Teile unterteilt ist. Jeder Teil umfasst eine Arbeitskammer 24 bzw. 26 und eine Unterdruckkammer 28, 30. Die Arbeitskammer 24 ist von der Unterdruckkammer 28 über eine bewegliche Wand 32 getrennt. Die Arbeitskammer 26 ist von der Unterdruckkammer 30 über eine weitere bewegliche Wand 34 getrennt.

Beide beweglichen Wände 32, 34 sind mit dem Steuerventilgehäuse 16 fest zur gemeinsamen Bewegung gekoppelt. In dem Steuerventil 14 sind zwei Ventilsitze 36, 38 angeordnet, wobei der erste Ventilsitz 36 die Arbeitskammern 24 und 26 von der Umgebungsatmosphäre trennt und wobei der zweite Ventilsitz 38 die Arbeitskammern 24 und 26 von den Unterdruckkammern 28 und 30 trennt.

Das Steuerventilgehäuse 16 ist über ein gummielastisches Reaktionsglied 40 mit einem Kraftausgangsglied 42 gekoppelt. Das Kraftausgangsglied 42 weist an seinem in Fig. 1 linken Ende einen zapfenartigen Vorsprung 44 auf, mit dem es mit einer in Fig.1 nicht dargestellten nachgeschalteten Hauptbremszylinderanordnung 58 kraft-übertragend koppelbar ist. Das Verstärkergehäuse 18 durchsetzen Zugbolzen 46, über die der Bremskraftverstärker 10 an einer Spritzwand anbringbar ist.

In Fig. 1 erkennt man ferner eine Rückstellfeder 48, die sich an einem Ende an dem Steuerventilgehäuse 16 abstützt.

Wie bereits ausgeführt, ist der Bremskraftverstärker 10 in Fig. 1 in einer Vormontagestellung gezeigt, das heißt in einer Stellung, in der der Bremskraftverstärker 10 noch nicht mit einer Hauptbremszylinderanordnung 58 gekoppelt ist. In diesem Zustand stützt sich die Rückstellfeder 48 am Verstärkergehäuse 18 im Bereich einer Aufnahmeöffnung 50 ab. Die Aufnahmeöffnung 50 ist allgemein zur Aufnahme der in Fig. 1 nicht dargestellten Hauptbremszylinderanordnung 58 vorgesehen und als Querschnittsbereich eines sich konzentrisch zu der Verlagerungsachse V und in das Verstärkergehäuse 18 hinein erstreckenden Kragens 52 ausgebildet. Dabei ist die Aufnahmeöffnung 50 mit einer Rückhalteeinrichtung 55 in Form eines radial nach innen abgewinkelten Anschlagabschnitts 54 und einem sich axial in das Verstärkergehäuse hinein erstreckenden und geringfügig radial nach außen abgewinkelten Führungsabschnitts 56 ausgebildet. Der Anschlagabschnitt 54 und der Führungsabschnitt 56 sind jeweils einstückig an die Aufnahmeöffnung 50 und an den einstückig in das Verstärkergehäuse übergehenden Kragen 52 angeformt. Ferner sind der Anschlagabschnitt 54 und der Führungsabschnitt 56 sowie der Kragen 52 aus dem selben Material wie das Verstärkergehäuse 18 hergestellt.

In Fig. 1 sind nur ein Anschlagabschnitt 54 und der Führungsabschnitt 56 in einer gegenüberliegenden Konfiguration dargestellt, was jedoch lediglich zu Erläuterungszwecken dient. Die genaue Anordnung und Anzahl der Führungsabschnitte 56 und Anschlagabschnitte 54 an der Aufnahmeöffnung 50 wird mit Bezug auf die nachfolgenden Figuren noch ausführlicher erläutert.

In Fig. 1 erkennt man, dass der Anschlagabschnitt 54 mit der Rückstellfeder 48 radial überlappt. Somit stellt der Anschlagabschnitt 54 einen die axiale Bewegung der Rückstellfeder 48 begrenzenden Anschlag bereit, wodurch ein Herausfallen der Rückstellfeder 48 aus der mit einem größeren Durchmesser versehenen Aufnahmeöffnung 50 verhindert wird. Ferner erkennt man in Fig. 1, dass der Führungsabschnitt 56 mit der Rückstellfeder 48 axial überlappt. Dies begrenzt eine Bewegung der Rückstellfeder 48 in radialer Richtung. Ferner kann die Rückstellfeder 48 dadurch in einer gewünschten Lage relativ zu der Verlagerungsachse V ausgerichtet werden.

Der Bremskraftverstärker nach Fig. 1 funktioniert in an sich üblicher Weise. Das heißt, bei einer Betätigung des nicht gezeigten Bremspedals wird eine Kraft F auf das Krafteingangsglied 12 ausgeübt, so dass sich das Krafteingangsglied 12 in Fig. 1 in axialer Richtung V nach links verlagert. Dadurch wird der erste Dichtsitz 36 geöffnet, so dass es zu einem Aufbau einer Druckdifferenz an den beweglichen Wänden 32 und 34 kommt. Diese bewirken, dass das Verstärkergehäuse 16 in Fig. 1 nach links verlagert wird, bis sich der erste Dichtsitz 36 wieder schließt. Somit wird die Betätigungskraft F verstärkt durch die sich aus der Druckdifferenz an den beweglichen Wänden 32 und 34 ergebende Verstärkerwirkung über das Kraftausgangsglied 42 an das nachfolgende Bremssystem übertragen. Beim Freigeben des Bremspedals laufen die vorstehend geschilderten Vorgänge in umgekehrter Reihenfolge ab, so dass es zu einer Druckentlastung an den beweglichen Wänden 32 und 34 kommt, bis der Bremskraftverstärker 10 wieder in seine in Fig. 1 gezeigte Ausgangsstellung zurückkehrt.

In Fig. 2 ist der Bremskraftverstärker 10 in einem mit einer Hauptbremszylinderanordnung 58 montierten Zustand gezeigt. Das Kraftausgangsglied 42 ist dabei mit einem verlagerbaren, aus einem allgemein feststehenden Hauptbremszylindergehäuse 59 hervorstehenden Betätigungskolben 60 der Hauptbremszylinderanordnung 58 gekoppelt. Folglich kann das Kraftausgangsglied 42 eine Bremskraft auf den Betätigungskolben 60 übertragen, so dass dieser innerhalb des Bremszylindergehäuses 58 verlagert wird. Dadurch können in allgemein bekannter Weise Bremskräfte innerhalb eines dem Bremskraftverstärker 10 nachgeschalteten Bremssystem aufgebaut werden.

Ferner erkennt man in Fig. 2, dass sich das zweite Ende der Rückstellfeder 48 an einer Stirnfläche 74 der Hauptbremszylinderanordnung 58 abstützt, wodurch das Steuerventil 40 in dessen Ausgangsstellung vorgespannt ist. Somit stützt sich die Rückstellfeder 48 nicht mehr wie im vormontierten Zustand an der an der Aufnahmeöffnung 50 angeformten Rückhalteeinrichtung 55 ab, sondern ist von dieser abgehoben. Das zweite Ende der Rückstellfeder 48 ist in Figur 2 entsprechend weiter in das Verstärkergehäuse 18 hinein verlagert.

Bei der Montage der Hauptbremszylinderanordnung 58 mit dem Bremskraftverstärker 10 muss ein axialer Endabschnitt 64 des Hauptbremszylindergehäuses 58 in die Aufnahmeöffnung 50 eingeführt und auch um einen gewissen Betrag durch die Aufnahmeöffnung 50 hindurchgeschoben werden. Um hierbei Kollisionen mit dem radial nach innen ragenden Führungsabschnitt 54 zu vermeiden, ist der axialen Endabschnitt 64 als eine nachfolgend noch ausführlicher beschriebene und in dieser Figur lediglich schematisch dargestellte Aufsatzhülse 66 ausgebildet, in deren Außenumfangsfläche mehrere Ausnehmungen 62 ausgebildet sind. Die Ausnehmungen 62 sind derart bemessen, dass sie wenigstens einen Führungsabschnitt 54 aufnehmen können, so dass das Hauptbremszylindergehäuse 58 mit seinem axialen Endabschnitt 64 kollisionsfrei durch die Aufnahmeöffnung 50 axial hindurch bewegt werden kann. Die Aufsatzhülse 66 weist darüber hinaus die Stirnfläche 74 auf, über die sich das zweite Ende der Rückstellfeder 48 an der Hauptbremszylinderanordnung abstützt. Wie ferner aus Fig. 2 ersichtlich, wird die Einstecktiefe des Hauptbremszylindergehäuses 58 durch Anschlagflansche 68 begrenzt, sobald diese mit einer Außenseite des Verstärkergehäuses 18 in Anlage gelangen.

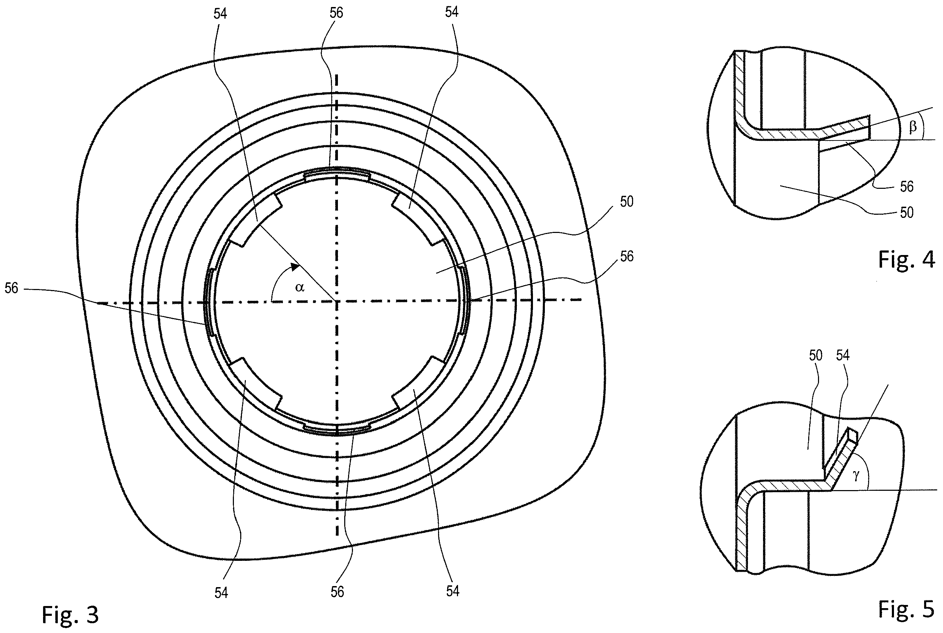

Fig. 3 zeigt eine Detailansicht der Rückhalteeinrichtung 55 gemäß den vorstehend beschriebenen Figuren. Man erkennt zunächst, dass die Aufnahmeöffnung 50 mit einer Mehrzahl von Anschlagabschnitten 54 und Führungsabschnitten 56 ausgebildet ist, wobei im gezeigten Fall jeweils vier Anschlagabschnitte 54 und vier Führungsabschnitte 56 vorgesehen sind. Dabei sind die Abschnitte gleichmäßig in Umfangsrichtung entlang der Aufnahmeöffnung 50 verteilt, so dass diese im Wesentlichen um einen Winkel a von 45° in Umfangsrichtung zueinander versetzt sind.

In Figuren 4 und 5 sind jeweils Schnittansichten eines Anschlagabschnitts 54 und eines Führungsabschnitts 56 aus Fig. 3 gezeigt. In Fig. 4 ist der in Fig. 3 obere, bzw. bei einem Winkel a von 90° angeordnete Führungsabschnitt 56 gezeigt. Man erkennt, dass der Führungsabschnitt 56 bezogen auf die Aufnahmeöffnung 50 um einen Winkel β geringfügig radial nach außen abgewinkelt ist. Im gezeigten Fall beträgt der Winkel β 20°.

In Fig. 5 ist einer der Anschlagabschnitte 54 aus Fig. 3 gezeigt, wobei dieser um einen Winkels bezogen auf die Aufnahmeöffnung 50 radial nach innen abgewinkelt ist. Im gezeigten Fall beträgt der Winkel γ 60°.

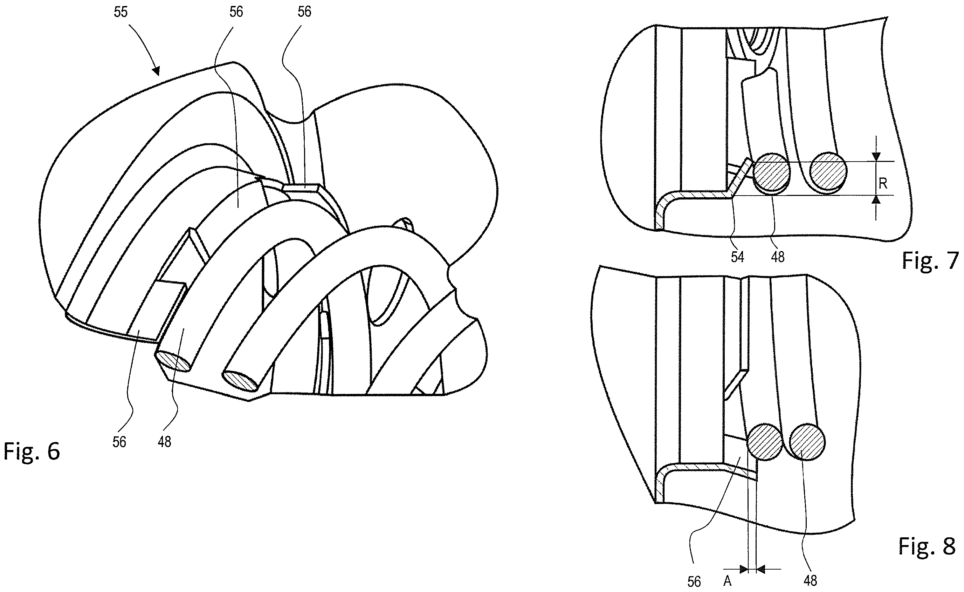

In den Fig. 6 bis 8 ist die Rückhalteeinrichtung 55 gemäß den vorstehenden Figuren in Detailansicht und in Eingriff mit der Rückstellfeder 48 gezeigt. Dabei erkennt man insbesondere in den Figuren 7 und 8 wiederum die radiale Überlappung R der Anschlagabschnitte 54 mit der Rückstellfeder 48 sowie die axiale Überlappung A der Führungsabschnitte 56 mit der Rückstellfeder 48. Ferner wird ersichtlich, dass das radial nach außen abgewinkelte Ausbilden der Führungsabschnitte 56 auch eine zentrierende Wirkung bereitstellt, aufgrund derer die Rückstellfeder 48 in eine gewünschte Solllage relativ zu der in diesen Figuren nicht gezeigten Verlagerungsachse V gebracht werden kann und wodurch ein allgemeiner Toleranzausgleich zwischen den Komponenten ermöglicht wird.

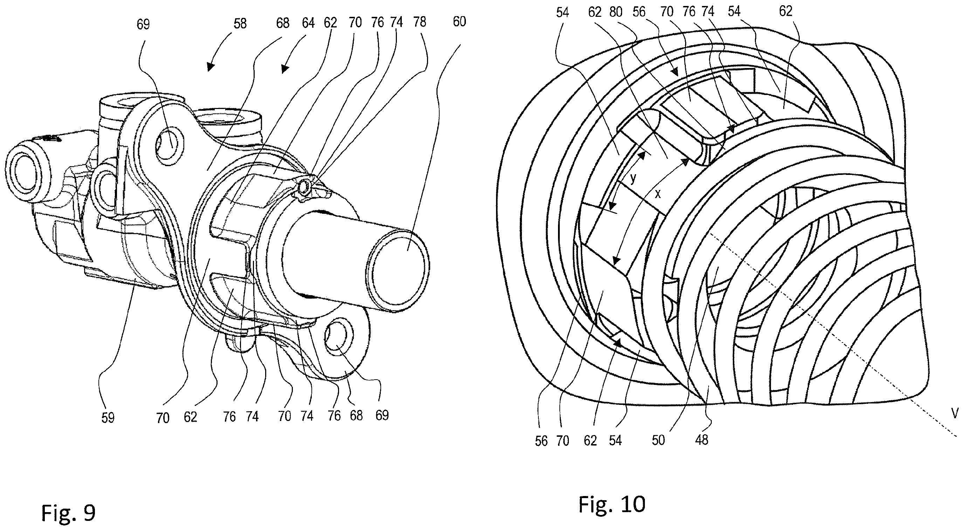

In Fig. 9 ist die im Zusammenhang mit Fig. 2 beschriebene Hauptbremszylinderanordnung 58 in Einzelteildarstellung gezeigt. Man erkennt wiederum die Anschlagflansche 68 sowie den Betätigungskolben 60 und die den axialen Endabschnitt 64 des Hauptbremszylindergehäuses 59 bildende Aufsatzhülse 66. Aus Fig. 9 verdeutlicht sich erneut die profilierte Ausbildung der Außenumfangsfläche der Aufsatzhülse 66, die mit mehreren Ausnehmungen 62 zur Aufnahme von jeweils einem Führungsabschnitt 54 ausgebildet ist. Dabei ist die Aufsatzhülse im gezeigten Fall aus einem Kunststoffmaterial hergestellt, wodurch eine hohe Formgestaltungsfreiheit gewährleistet ist. Die Anschlagflansche 68 weisen ferner Bohrungen 69 zur Aufnahme von Befestigungsmitteln auf, um die Hauptbremszylinderanordnung 58 an dem Bremskraftverstärker 10 zu befestigen.

Ferner erkennt man in Fig. 9, dass die an die Ausnehmungen 62 angrenzenden Bereiche der Außenumfangsfläche der Aufsatzhülse 66 als rippenförmige Abschnitte 70 ausgebildet sind. Diese weisen an Ihren äußeren axialen Enden bzw. Stirnflächen 74 Ausnehmungen 76 zum Abstützen und Aufnehmen des zweiten Endes der Rückstellfeder 48 auf. Die Ausnehmung 76 sind dabei komplementär zu dem zweiten Ende der Rückstellfeder geformt, wobei sie sich im gezeigten Fall an einem radial äußeren Rand der Stirnflächen 74 im Wesentlichen in Umfangsrichtung und mit einer konkave Wölbung in die Stirnflächen 74 hinein erstrecken. An der Stirnfläche 74 des in Figur 9 oberen rippenförmigen Abschnittes 70 ist ferner eine Schraube 78 erkennbar, mit der die Aufsatzhülse 66 an dem Hauptbremszylindergehäuse 59 befestigt ist.

In Fig. 10 ist die Aufsatzhülse 66 in einem in der Aufnahmeöffnung 50 eingesetzten Zustand gezeigt. Aus Gründen der Übersichtlichkeit sind die weiteren Komponenten der Hauptbremszylinderanordnung 58 dabei nicht gesondert dargestellt. Man erkennt, dass jeweils ein Anschlagabschnitte 54 in einer der Ausnehmungen 62 der Aufsatzhülse aufgenommen ist, wobei die Erstreckung x der Ausnehmungen 62 in Umfangsrichtung die Erstreckung y der Anschlagabschnitte 54 in Umfangsrichtung deutlich überschreitet.

Ferner erkennt man in Fig. 10, dass die Rückstellfeder 48 sich mit ihrem zweiten Ende, das im gezeigten Fall durch das äußere Ende einer Abschlusswindung 80 gebildet wird, an der der in Fig. 10 oberen Rippe 70 abstützt und in der dort angeordneten Ausnehmung 76 aufgenommen ist. Dadurch wird das zweite Ende der Rückstellfeder 48 von der Aufsatzhülse 66 in einer definierten Ausrichtung und Position an der Hauptbremszylinderanordnung 58 gehalten.

## Patentansprüche

1. Bremskraftverstärker (10) für eine Kraftfahrzeugbremsanlage, mit
- einem mit einem Bremspedal gekoppelten oder koppelbaren und entlang einer Verlagerungsachse (V) verlagerbaren Krafteingangsglied (12),
- einem nach Maßgabe einer Verlagerung des Krafteingangsglieds (12) betätigbaren Steuerventil (14),
- einer in einem Verstärkergehäuse (18) angeordneten, über das Steuerventil (14) ansteuerbaren Kammeranordnung (20) mit wenigstens einer Unterdruckkammer (28, 30) und wenigstens einer Arbeitskammer (24, 26), die über wenigstens eine mit dem Steuerventil (14) gekoppelte bewegliche Wand (32, 34) voneinander getrennt sind, und
- einem Kraftausgangsglied (42) zum Abgeben einer Bremskraft an eine nachgeschaltete Hauptbremszylinderanordnung, wobei das Steuerventil (14) mit dem Kraftausgangsglied (42) über eine Rückstellfeder (48) in eine Ausgangsstellung vorgespannt ist, wobei sich die Rückstellfeder (48) mit einem ersten Ende an dem Steuerventil (14) abstützt,
**dadurch gekennzeichnet, dass** das Verstärkergehäuse (18) eine Aufnahmeöffnung (50) für die nachgeschaltete Hauptbremszylinderanordnung (58) aufweist, die mit wenigstens einem axialen Führungsabschnitt (56) und mit wenigstens einem radialen Anschlagabschnitt (54) ausgebildet ist, die jeweils dazu eingerichtet sind, ein zweites Ende der Rückstellfeder (48) abzustützen.

2. Bremskraftverstärker (10) nach Anspruch 1,
**dadurch gekennzeichnet, dass** sich der Führungsabschnitt (56) und der Anschlagabschnitt (54) zumindest teilweise in einem gemeinsamen Umfangssegmentbereich der Aufnahmeöffnung (50) erstrecken und axial benachbart angeordnet sind.

3. Bremskraftverstärker (10) nach Anspruch 1,
**dadurch gekennzeichnet, dass** sich der Führungsabschnitt (56) und der Anschlagabschnitt (54) im Wesentlichen in verschiedenen Umfangssegmentbereichen der Aufnahmeöffnung (50) erstrecken.

4. Bremskraftverstärker (10) nach Anspruch 3,
**dadurch gekennzeichnet, dass** die Aufnahmeöffnung (50) mit einer Mehrzahl von Führungsabschnitten (56) und/oder Anschlagabschnitten (54) ausgebildet ist und die Führungsabschnitte (56) und Anschlagabschnitte (54) im Wesentlichen gleichmäßig verteilt entlang des Umfangs der Aufnahmeöffnung (50) angeordnet sind.

5. Bremskraftverstärker (10) nach einem der vorangehenden Ansprüche,
**dadurch gekennzeichnet, dass** der Führungsabschnitt (56) von der Aufnahmeöffnung (50) radial nach außen abgewinkelt ist.

6. Bremskraftverstärker (10) nach einem der vorangehenden Ansprüche,
**dadurch gekennzeichnet, dass** der Anschlagabschnitt (54) von der Aufnahmeöffnung (50) radial nach innen abgewinkelt ist.

7. Bremskraftverstärker (10) nach einem der vorangehenden Ansprüche,
**dadurch gekennzeichnet, dass** der Anschlagabschnitt (54) mit dem zweiten Ende der Rückstellfeder (48) zumindest teilweise radial überlappt.

8. Bremskraftverstärker (10) nach einem der vorangehenden Ansprüche,
**dadurch gekennzeichnet, dass** der Führungsabschnitt (56) mit dem zweiten Ende der Rückstellfeder (48) zumindest teilweise axial überlappt.

9. Bremskraftverstärker (10) nach einem der vorangehenden Ansprüche,
**dadurch gekennzeichnet, dass** die Aufnahmeöffnung (50) als ein Querschnittsbereich eines sich von dem Verstärkergehäuse (18) erstreckenden rohrförmigen Kragens (52) ausgebildet ist.

10. Bremskraftverstärker (10) nach Anspruch 9,
**dadurch gekennzeichnet, dass** sich der Kragen (52) konzentrisch zu der Verlagerungsachse (V) erstreckt.

11. Bremskraftverstärker (10) nach einem Anspruch 9 oder 10,
**dadurch gekennzeichnet, dass** der Kragen (52) sich zumindest teilweise in das Verstärkergehäuse (18) hinein erstreckt.

12. Bremskraftverstärker (10) nach einem der vorangehenden Ansprüche,
**dadurch gekennzeichnet, dass** der Führungsabschnitt (56) und der Anschlagabschnitt (54) das zweite Ende der Rückstellfeder (48) lediglich vor Montage des Bremskraftverstärkers (10) mit der Hauptbremszylinderanordnung (58) unmittelbar abstützen und nach der Montage das zweite Ende der Rückstellfeder (48) von dem Führungsabschnitt (56) und dem Anschlagabschnitt (54) abgehoben ist.

13. Bremskraftverstärkungsanordnung,
umfassend einen Bremskraftverstärker (10) nach einem der vorangehenden Ansprüche und eine Hauptbremszylinderanordnung (58),
**dadurch gekennzeichnet, dass** die Hauptbremszylinderanordnung (58) einen axialen Endabschnitt (64) aufweist, der sich in oder durch die Aufnahmeöffnung (50) des Bremskraftverstärkers (10) erstreckt, wobei die Außenumfangsfläche des axialen Endabschnitts (50) korrespondierend zu dem Führungsabschnitt (56) und/oder dem Anschlagabschnitt (54) profiliert ist.

14. Bremskraftverstärkungsanordnung nach Anspruch 13,
**dadurch gekennzeichnet, dass** der axiale Endabschnitt (64) eine Ausnehmung (62) in seiner Außenumfangsfläche aufweist, die dazu ausgebildet ist, den Führungsabschnitt (56) der Aufnahmeöffnung (50) aufzunehmen.

15. Bremskraftverstärkungsanordnung nach Anspruch 14,
**dadurch gekennzeichnet, dass** der axiale Endabschnitt (64) als Teil einer separaten Aufsatzhülse (66) ausgebildet ist, die an der Hauptbremszylinderanordnung (58) angebracht ist.

## Claims

1. Brake booster (10) for a motor-vehicle brake system, with
- a force-input member (12) which is coupled or can be coupled with a brake pedal and which is displaceable along a displacement axis (V),
- a control valve (14) which can be actuated in accordance with a displacement of the force-input member (12),
- a chamber arrangement (20) which is arranged in a booster housing (18) and can be selected via the control valve (14), with at least one vacuum chamber (28, 30) and with at least one working chamber (24, 26), which have been separated from one another via at least one movable wall (32, 34) coupled with the control valve (14), and
- a force-output member (42) for delivering a braking force to a downstream master-brake-cylinder arrangement, wherein the control valve (14) with the force-output member (42) has been biased into an initial position with the aid of a restoring spring (48), wherein the restoring spring (48) is supported with a first end on the control valve (14),
**characterised in that** the booster housing (18) exhibits a receiving opening (50) for the downstream master-brake-cylinder arrangement (58), which has been designed with at least one axial guide portion (56) and with at least one radial stop portion (54), which have each been configured to support a second end of the restoring spring (48).

2. Brake booster (10) according to Claim 1,
**characterised in that** the guide portion (56) and the stop portion (54) extend at least partly in a common peripheral-segment region of the receiving opening (50) and have been arranged to be axially adjacent.

3. Brake booster (10) according to Claim 1,
**characterised in that** the guide portion (56) and the stop portion (54) extend substantially in different peripheral-segment regions of the receiving opening (50).

4. Brake booster (10) according to Claim 3,
**characterised in that** the receiving opening (50) has been designed with a plurality of guide portions (56) and/or stop portions (54) and the guide portions (56) and stop portions (54) have been arranged to be substantially uniformly distributed along the periphery of the receiving opening (50).

5. Brake booster (10) according to one of the preceding claims,
**characterised in that** the guide portion (56) has been angled radially outwards away from the receiving opening (50).

6. Brake booster (10) according to one of the preceding claims,
**characterised in that** the stop portion (54) has been angled radially inwards away from the receiving opening (50).

7. Brake booster (10) according to one of the preceding claims,
**characterised in that** the stop portion (54) at least partly overlaps radially with the second end of the restoring spring (48).

8. Brake booster (10) according to one of the preceding claims,
**characterised in that** the guide portion (56) at least partly overlaps axially with the second end of the restoring spring (48).

9. Brake booster (10) according to one of the preceding claims,
**characterised in that** the receiving opening (50) has been designed as a cross-sectional region of a tubular collar (52) extending from the booster housing (18).

10. Brake booster (10) according to Claim 9,
**characterised in that** the collar (52) extends concentrically in relation to the displacement axis (V).

11. Brake booster (10) according to Claim 9 or 10,
**characterised in that** the collar (52) extends at least partly into the booster housing (18).

12. Brake booster (10) according to one of the preceding claims,
**characterised in that** the guide portion (56) and the stop portion (54) directly support the second end of the restoring spring (48) only prior to assembly of the brake booster (10) with the master-brake-cylinder arrangement (58), and after assembly the second end of the restoring spring (48) has been lifted away from the guide portion (56) and the stop portion (54).

13. Brake-boosting arrangement,
comprising a brake booster (10) according to one of the preceding claims and a master-brake-cylinder arrangement (58),
**characterised in that** the master-brake-cylinder arrangement (58) exhibits an axial end portion (64) which extends into or through the receiving opening (50) of the brake booster (10), wherein the outer peripheral surface of the axial end portion (50) has been profiled to correspond to the guide portion (56) and/or to the stop portion (54).

14. Brake-boosting arrangement according to Claim 13,
**characterised in that** the axial end portion (64) exhibits a recess (62) in its outer peripheral surface, which has been designed to receive the guide portion (56) of the receiving opening (50).

15. Brake-boosting arrangement according to Claim 14,
**characterised in that** the axial end portion (64) has been designed as part of a separate attachment sleeve (66) which has been fitted to the master-brake-cylinder arrangement (58).

## Revendications

1. Servofrein (10) pour un système de freinage de véhicule automobile, comprenant
- un élément d'entrée de force (12) qui est ou peut être accouplé à une pédale de frein et est déplaçable le long d'un axe de déplacement (V),
- une soupape de commande (14) actionnable en fonction d'un déplacement de l'élément d'entrée de force (12),
- un ensemble de chambres (20) disposé dans un boîtier de servofrein (18), pouvant être commandé par la soupape de commande (14) et comprenant au moins une chambre à dépression (28, 30) et au moins une chambre de travail (24, 26) qui sont séparées l'une de l'autre par au moins une paroi mobile (32, 34) accouplée à la soupape de commande (14), et
- un élément de sortie de force (42) destiné à délivrer une force de freinage à un ensemble cylindre de frein principal monté en aval, la soupape de commande (14) étant précontrainte avec l'élément de sortie de force (42) dans une position initiale moyennant un ressort de rappel (48), lequel ressort de rappel (48) est supporté à une première extrémité par la soupape de commande (14),
**caractérisé en ce que** le boîtier de servofrein (18) présente une ouverture de réception (50) pour l'ensemble cylindre de frein principal (58) monté en aval, qui est formée avec au moins une section de guidage axial (56) et au moins une section de butée radiale (54) qui sont adaptées chacune pour supporter une seconde extrémité du ressort de rappel (48).

2. Servofrein (10) selon la revendication 1,
**caractérisé en ce que** la section de guidage (56) et la section de butée (54) s'étendent au moins partiellement dans un secteur circonférentiel commun de l'ouverture de réception (50) et sont disposées axialement adjacentes.

3. Servofrein (10) selon la revendication 1,
**caractérisé en ce que** la section de guidage (56) et la section de butée (54) s'étendent sensiblement dans différents secteurs circonférentiels de l'ouverture de réception (50).

4. Servofrein (10) selon la revendication 3,
**caractérisé en ce que** l'ouverture de réception (50) est réalisée avec une pluralité de sections de guidage (56) et/ou de sections de butée (54), et que les sections de guidage (56) et sections de butée (54) sont réparties sensiblement régulièrement le long de la circonférence de l'ouverture de réception (50).

5. Servofrein (10) selon l'une des revendications précédentes,
**caractérisé en ce que** la section de guidage (56) est coudée radialement vers l'extérieur à partir de l'ouverture de réception (50).

6. Servofrein (10) selon l'une des revendications précédentes,
**caractérisé en ce que** la section de butée (54) est coudée radialement vers l'intérieur à partir de l'ouverture de réception (50).

7. Servofrein (10) selon l'une des revendications précédentes,
**caractérisé en ce que** la section de butée (54) est en recouvrement radial au moins partiel avec la seconde extrémité du ressort de rappel (48).

8. Servofrein (10) selon l'une des revendications précédentes,
**caractérisé en ce que** la section de guidage (56) est en recouvrement axial au moins partiel avec la seconde extrémité du ressort de rappel (48).

9. Servofrein (10) selon l'une des revendications précédentes,
**caractérisé en ce que** l'ouverture de réception (50) est réalisée sous la forme d'une zone de section transversale d'un collet tubulaire (52) s'étendant à partir du boîtier de servofrein (18).

10. Servofrein (10) selon la revendication 9,
**caractérisé en ce que** le collet (52) s'étend concentriquement à l'axe de déplacement (V).

11. Servofrein (10) selon l'une des revendications 9 ou 10,
**caractérisé en ce que** le collet (52) s'étend au moins partiellement à l'intérieur du boîtier de servofrein (18).

12. Servofrein (10) selon l'une des revendications précédentes,
**caractérisé en ce que** la section de guidage (56) et la section de butée (54) supportent directement la seconde extrémité du ressort de rappel (48) seulement avant le montage du servofrein (10) avec l'ensemble cylindre de frein principal (58) et que la seconde extrémité du ressort de rappel (48) est relevée à l'écart de la section de guidage (56) et de la section de butée (54) après le montage.

13. Ensemble servofrein,
comprenant un servofrein (10) selon l'une des revendications précédentes et un ensemble cylindre de frein principal (58),
**caractérisé en ce que** l'ensemble cylindre de frein principal (58) présente une section d'extrémité axiale (64) qui s'étend dans ou à travers l'ouverture de réception (50) du servofrein (10), la surface périphérique extérieure de la section d'extrémité axiale (50) étant profilée de manière à correspondre à la section de guidage (56) et/ou la section de butée (54).

14. Ensemble servofrein selon la revendication 13,
**caractérisé en ce que** la section d'extrémité axiale (64) présente dans sa surface périphérique extérieure un évidement (62) qui est conçu pour recevoir la section de guidage (56) de l'ouverture de réception (50).

15. Ensemble servofrein selon la revendication 14,
**caractérisé en ce que** la section d'extrémité axiale (64) est réalisée sous la forme d'une douille rapportée (66) séparée qui est montée sur l'ensemble cylindre de frein principal (58).
